**Europäisches Patentamt**

**European Patent Office**

**Office européen des brevets**

(19)

(11) Veröffentlichungsnummer: **0 404 943 A1**

# (12) EUROPÄISCHE PATENTANMELDUNG
## veröffentlicht nach Art. 158 Abs. 3 EPÜ

(21) Anmeldenummer: **89905368.0**

(22) Anmeldetag: **20.12.88**

(86) Internationale Anmeldenummer:
**PCT/SU88/00267**

(87) Internationale Veröffentlichungsnummer:
**WO 90/07013 (28.06.90 90/15)**

(51) Int. Cl.5: **C22C 1/05, C22C 1/08**

(43) Veröffentlichungstag der Anmeldung:
**02.01.91 Patentblatt 91/01**

(84) Benannte Vertragsstaaten:
**AT CH DE FR GB IT LI NL SE**

(71) Anmelder: **INSTITUT STRUKTURNOI MAKROKINETIKI AKADEMII NAUK SSSR Moskovskaya oblast Poselok Chernogolovka 142432(SU)**

(72) Erfinder: **MERZHANOV, Alexandr Grigorievich ul. Tretya, 3-2, Moskovaskaya oblast poselok Chernogolowka 142432(SU)**
Erfinder: **BOROVINSKAYA, Inna Petrovna ul. Tretya, 3-2, Moskovskaya oblast poselok Chernogolovka 142432(SU)**
Erfinder: **BLOSHENKO, Vitaly Nikolaevich Shkolny bulvar, 3-68, Moskovskaya oblast poselok Chernogolovka 142432(SU)**
Erfinder: **BOKY, Vladimir Andreevich Institutsky prospekt, 11-62, Moskovsakaya oblast poselok Chernogolovka 142432(SU)**

(74) Vertreter: **Hansen, Bernd, Dr. Dipl.-Chem. et al Hoffmann, Eitle & Partner Patent- und Rechtsanwälte Arabellastrasse 4e 4 D-8000 München 81(DE)**

(54) **PORÖSES FEUERBESTÄNDIGES MATERIAL, GEGENSTAND DARAUS UND VERFAHREN ZUR HERSTELLUNG.**

(57) Die Erfindung bezieht sich auf das Gebiet der Schaffung von neuen porösen hochschmelzenden Materialien mit einer Porosität von 25 bis 70 Vol.% und dem Anteil von offenen Poren von 99,7%, die durch Verdichtung eines exothermen Gemisches, das mindestens ein Metall der IV-VI., VIII. Gruppe des Periodensystems und zumindest ein Nichtmetall: Bor, Kohlenstoff, Silizium enthält, durch eine thermische Vakuumbehandlung des Gemisches bei 300 bis 700°C, die Herbeiführung einer Temperatur des verdichteten Gemisches von 200 bis 1050°C mit nachfolgender lokaler Initiierung der Verbrennung dieses Gemisches im Vakuum hergestellt werden. Zur Herstellung eines Erzeugnisses formiert man

einen Rohling, dessen Dichte der Dichte des Fertigerzeugnisses entspricht, und behandelt ihn in ähnlicher Weise. Erzeugnisse komplizierten Profils stellt
man aus den Rohlingen (1) her, die mit Auflagen (2)
vereinigt sind, welche aus einem Gemisch derselben
Zusammensetzung geformt sind. Zeichnung.

## HOCHSCHMELZENDES PORÖSES MATERIAL, ERZEUGNIS AUS DIESEM MATERIAL UND VERFAHREN ZUR HERSTELLUNG DIESES ERZEUGNISSES

### Gebiet der Technik

Die vorliegende Erfindung bezieht sich auf das Gebiet der Schaffung von neuen porösen Verbundwerkstoffen und ihrer Anwendung und betrifft insbesondere ein hochschmelzendes poröses Material auf der Basis von hochschmelzenden anorganischen Verbindungen der Metalle der IV-VI., VIII. Gruppe des Periodensystems, ein Erzeugnis aus diesem Material und ein Verfahren zur Herstellung dieses Erzeugnisses.

Das erfindungsgemässe hochschmelzende poröse Material und das Erzeugnis aud ihm werden eine breite Verwendung im Maschinenbau, in der chemischen und metallurgischen Industrie finden.

### Zugrundeliegender Stand der Technik

Die zur Zeit bekannten hochschmelzenden porösen Materialien auf der Basis von Karbiden, Bordien und Siliziden der Metalle der IV-IV. Gruppe des Periodensystems weisen eine Gesamtporösität von höchstens 50 Vol.%, enthalten eine geringe Menge von offenen Poren (weniger als 60% von der Gesamtporösität), besitzen sehr niedrige Festigkeitseigenschaften (Druckfestigkeit bis 6,0 MPa) und haben eine sehr niedrige Hitzebeständigkeit. Unter den Bedingungen von hohen Temperaturen agglomerieren sie stark, indem sie die Gesamtporösität vermindern, den Anteil von geschlossenen Poren vergrössern und die ursprüngliche Form und die ursprünglichen Abmessungen verlieren. Da diese Kennwerte die Hauptkriterien der Qualität der porösen Materialien sind, ist es offensichtlich, dass sie dem hohen Niveau der Forderungen nicht entsprechen, die an sie bei der Benutzung gestellt werden.

Die genannten hochschmelzenden porösen Materialien stellt man nach den Methoden der Sinterung in zwei Stadien her. Im ersten Stadium wird aus einem pulverförmigen Gemisch der Reagenzien - des Oxids eines Metalls der IV-VI. Gruppe des Periodensystems und eines aus der Reihe Kohlenstoff, Bor, Silizium gewählten Nichtmetalls durch Sintern in Öfen mit Schutzatmosphäre bei einer Temperatur von 1200 bis 2000°C während mehrerer oder einiger zehn Stunden eine hochschmelzende Verbindung - das Karbid, Borid oder Silizid des entsprechenden Metalls - synthesiert. Im zweiten Stadium werden das Vermischen von pulverförmigen Komponenten (hochschmelzenden Verbindungen, Metallen) mit einem Plastifizierungsmittel und einem porenbildenden Füllstoff, das Vakuumsintern zur Entfernung des Füllstoffes und das nachfolgende endültige Sintern in einer Schutzatmosphäre bei Temperaturen zwischen 1500 und 2500°C während einer langen Zeit durchgeführt.

Die bekannten Verfahren zur Herstellung von hochschmelzenden porösen Materialien kennzeichnen sich durch einen hohen Elektroenergieaufwand, eine lange Dauer des Prozesses, die Vielstufigkeit desselben, eine niedrige Leistung und die Verunreinigung des Materials während der Sinterung.

Es ist ein Verfahren zur Herstellung von hochschmelzenden porösen Materialien aus hochschmelzenden Verbindungen - den Karbiden von Titan, Zirkonium, Niob, Tantal und Molybdän - bekannt, das folgende Stadien einschließt: die Einführung eines Füllstoffes - des Kaliumbromids - in das Pulver der hochschmelzenden Verbindung, das Pressen, das Vakuumsintern zur Entfernung des Füllstoffes und dann das Sintern zur Herstellung eines porösen Materials (SU, A, 424658).

Das hergestellte Material hat eine Gesamtporosität von weniger als 45 Vol.%, wobei der Anteil von geschlossenen Poren über 25% von der Gesamtporosität beträgt, und eine niedrige mechanische Festigkeit gleich 2,0 bis 3,0 MPa.

Es ist ein Verfahren zur Herstellung eines hochschmelzenden porösen Materials mit einer Gesamtporösität von 30 bis 35 Vol.% auf der Basis von Diboriden der Metalle Tantal, Zirkonium, Hafnium, Wolfram bekannt. Nach diesem Verfahren wird zwecks Erhöhung der Beständigkeit gegen Wärmebelastungen und der mechanischen Festigkeit der hergestellten Materialien ein Teil des Pulvers vor der Formung der Granulation unterworfen, der übriggebliebene Teil wird mit den erhaltenen Granalien vermischt, und zur Aktivierung des Sinterprozesses werden 1 bis 6 Masse% Fluorid des Alkalimetalls oder des Erdalkalimetalls eingeführt, die Formung wird durch Vibrobearbeitung zustandegebracht, die Sinterung wird bei Temperaturen zwischen 1000 und 1500°C während zwei Stunden in der Argonatmosphäre durchgeführt (SU, A, 571180).

Die hergestellten Materialien haben eine Porösität, in welcher der Anteil von geschlossenen Poren 80% beträgt, und kennzeichnen sich durch eine beträchtliche Verunreinigung durch Beimengungen von Metallen (Alkali- und Erdalkalimetallen, Eisen), während das Verfahren zu ihrer Herstellung es nicht gestattet, weder den Porositätsgrad noch den Anteil der offenen Poren zu regeln, eine Vielzahl von Operationen einschliesst und wenig produktiv ist. Die genannten Sinterungsverfahren gewährleisten es nicht, dass die hergestellten Materialien auf der Basis von Karbiden, Boriden und Siliziden der Metalle der IV-VI. Gruppe des Periodensystems eine hohe Gesamtporosität (bis zu 70 Vol.%), die einen erheblichen Anteil von offenen Poren hat, sowie eine hohe mechanische Festigkeit aufweisen. Solche hochschmelzende poröse Materialien finden eine beschränkte Anwendung hauptsächlich in Form von Pulvern und schliessen die Möglichkeit aus, aus ihnen Erzeugnisse herzustellen.

Es sind hochschmelzende poröse Materialien auf der Basis von Karbiden, Boriden und Siliziden der Metalle der IV. und V. Gruppe des Periodensystems bekannt, die man durch Zubereitung eines zur selbständigen Verbrennung fähigen exothermen Gemisches aus entsprechenden Metallen und Nichtmetallen, durch Verdichtung desselben und Durchführung der lokalen Initiierung der Verbrennung des verdichteten Gemisches in der Inertgasatmosphäre bei einem Druck von 0,05 bis 100 MPa herstellt (US, A, 3726643). Nach der Abkühlung stellen die gewonnenen Materialien poröse formlose Agglomeratkuchen mit zahlreichen Lunkern und Rissen, mit einem niedrigen Anteil von offenen Poren und einer sehr niedrigen mechanischen Festigkeit gleich 0,8 MPa dar, was die Möglichkeit ihrer Verwendung in Form von porösen Materialien und um so mehr als Erzeugnisse ausschliesst. Darüber hinaus gestattet eine solche Technologie es nicht, den Porositätsgrad und die Porengrösse dieser Materialien zu regeln, welche nur nach einer Mahlung in Form von Pulvern verwendet werden können.

Offenbarung der Erfindung

Der vorliegenden Erfindung liegt die Aufgabe zugrunde, ein hochschmelzendes poröses Material durch qualitative Änderung der technologischen Bedingungen seiner Herstellung zu schaffen, das grundsätzlich neue Eigenschaften besitzen würde, die sich von den Eigenschaften der bekannten hochschmelzenden porösen Materialien wesentlich unterscheiden, sowie ein Erzeugnis aus diesem Material und ein Verfahren zu seiner Herstellung zu schaffen, welches in einem technologischen Zyklus die Herstellung eines Profilerzeugnisses mit vorgegebenen Abmessungen, Form und Porositätsgrad ohne mechanische Nachbearbeitung sicherstellen würde.

Die Aufgabe wird dadurch gelöst, dass ein hochschmelzendes poröses Material vorgeschlagen wird, das man erfindungsgemäss aus einem exothermen Gemisch herstellt, welches mindestens ein Metall der IV-VI., VIII Gruppe des Periodensystems und zumindest ein aus der Reihe Bor, Kohlenstoff, Silizium gewähltes Nichtmetall enthält, wobei ihr Verhältnis die selbständige Verbrennung des Gemisches gewährleistet, welches man verdichtet und einer thermischen Vakuumbehandlung bei einer Temperatur von 300 bis 700°C unterwirft, worauf man die Temperatur des verdichteten exothermen Gemisches aus 200 bis 1050°C bringt und die lokale Initiierung der Verbrennung des genannten Gemisches im Vakuum oder in einer Inertgasatmosphäre bei einem Druck von nicht mehr als 1,5 MPa unter Bildung eines hochschmelzenden Materials mit einer Gesamtporosität von 25 bis 70 Vol.% zustandebringt.

Das erfindungsgemässe hochschmelzende poröse Material auf der Basis von hochschmelzenden Verbindungen bei verschiedenartigem atomarem Verhältnis von sie bildenden Bor, Silizium, Kohlenstoff und Metallen der IV-VI., VIII. Gruppe des Periodensystems kennzeichnet sich durch eine hohe Gesamtporosität, die vorwiegend von offenen Poren gebildet ist, bei Erreichung hoher Kennwerte in bezug auf die mechanische Festigkeit (die Druckfestigkeit bis 200 MPa). Das Material besitzt auch eine hohe Hitzebeständigkeit, verliert nicht die ihm vorgegebene Form unter den Bedingungen hoher Temperaturen, was eine unerlässliche Bedingung für die Herstellung eines Erzeugnisses aus ihm ist. Diese Materialien sind das Produkt einer Technologie, die ihre vorgegebenen Kennwerte im gesamten Komplex der Eigenschaften gewährleistet, welche für ihre breite Verwendung z.B. als Baumaterialien, Katalysatorträger erforderlich sind.

Es ist wünschenwert, dass zur Verbesserung der Qualität des Materials der Anteil von offenen Poren in ihm bis zu 99,7% von der Gesamtporosität beträgt. Eine derartige Struktur wird das Vorhandensein verschiedenartiger Beimengungen auf ein Minimum reduzieren, was den Einsatzbereich des Materials bedeutend erweitern wird.

Es ist bevorzugt, die Verdichtung des exothermen Gemisches bis zu einer Dichte vorzunehmen, die im wesentlichen der Dichte des Endmaterials gleich ist, was diesem ein Gefüge mit optimalen Eigenschaften gewährleistet.

Es ist erwünscht, die Regelung der Porosität während des Verbrennungsvorgangs durch Einwirkung auf das verdichtete exotherme Gemisch eines Druckes in der Bewegungsrichtung der Verbennungsfront zu bewerkstelligen.

Zur Erweiterung des Sortiments der Materialien und zum effektiveren Einsatz derselben ist es zweckmässig, dass in die Zusammensetzung des exothermen Gemisches mindestens ein aus der I-III. Gruppe des Periodensystems gewähltes Metall oder einzeln oder im Gemisch genommen das Karbid, Borid, Silizid zumindest eines aus der IV-VI., VIII. Gruppe des Periodensystems gewählten Metalls oder einzeln oder im Gemisch genommen das Oxyd, Nitrid wenigstens eines aus der III-V.

Es wird auch ein Erzeugnis aus einem hochschmelzenden porösen Material gemäss der Erfindung vorgeschlagen. Es kann eine beliebige vorgegebene Form, Abmessungen und Dichte mit einer Porosität und mechanischen Festigkeit haben, die durch die Qualität des Materials bestimmt werden.

Zur Lösung der gestellten Aufgabe wird ein Verfahren zur Herstellung dieses Erzeugnisses vorgeschlagen, welches erfindungsgemäss darin besteht, dass man aus einem exothermen Gemisch, das mindestens ein Metall aus der IV-VI., VIII. Gruppe des Periodensystems und zumindest ein aus der Reihe Kohlenstoff, Bor, Silizium gewähltes Nichtmetall enthält, wobei ihr Verhältnis die selbständige Verbrennung des Gemisches gewährleistet, einen Rohling mit einer Dichte des exothermen Gemisches formiert, die der Dichte des Fertigerzeugnisses im wesentlichen gleich ist, welchen Rohling man einer thermischen Vakuumbehandlung bei einer Temperatur von 300 bis 700°C unterwirft, worauf man die Temperatur des Rohlings auf 200 bis 1050°C bringt und die lokale Initiierung der Verbrennung dieses Rohlings im Vakuum oder in einer Inertgasatmosphäre bei einem Druck von nicht mehr als 1,5 MPa unter Bildung eines Fertigerzeugnisses durchführt.

Das Erzeugnis nach diesem Verfahren besitzt im wesentlichen dieselbe Form, Abmessungen und Dichte, welche während der Formung dem Rohling vorgegeben wurden, d.h., es wird die Stabilität seiner Reproduzierung erreicht. Die geringe Energieintensität und die Herstellung von Erzeugnissen mit hoher Porosität und beträchtlicher mechanischer Festigkeit ohne Anwendung der mechanischen Bearbeitung gewährleisten eine hohe Effektivität des Verfahrens, die diesen Kennwert bei den bekannten Verfahren bedeutend übersteigt.

Zur Herstellung von Erzeugnissen mit kompliziertem Profil, die sich durch die Isotropie der Eigenschaften im gesamten Volumen kennzeichnen, ist es zweckmässig, dass man vor der thermischen Vakuumbehandlung den Rohling veränderlichen Querschnitts mit mindestens einer Auflage bis zur Bildung eines zusammengesetzten Rohlings vereinigt, dessen Querschnittsprofil konstant und grössenmässig gleich in der Bewegungsrichtung der Verbennungsfront ist, wobei die Auflage aus einem exothermen Gemisch ausgeführt werden muss, in welchem die Bewegungsgeschwindigkeit der Verbrennungsfront im wesentlichen gleich oder höher als die Bewegungsgeschwindigkeit der Verbrennungsfront im exothermen Gemisch des genannten Rohlings ist, während die nachfolgende Behandlung des zusammengesetzten Rohlings in der vorstehend genannten Reihenfolge unter Trennung des Fertigerzeugnisses von der Auflage erfolgen muss.

Zur Erhöhung der Qualität des herzustellenden Erzeugnisses ist es zweckmässig, die lokale Initiierung des zusammengesetzten Rohlings in Form eines Ringes mit der in seinem Hohlraum untergebrachten Auflage von der Seite dieser Auflage zustandezubringen.

Zur Regelung der Porosität des herzustellenden Rohlings ist es bevorzugt, während des Verbrennungsvorgangs auf den Rohling mit einem Druck in der Bewegungsrichtung der Verbrennungsfront einzuwirken.

Zur Erweiterung des Sortiments von Erzeugnisses mit unterschiedlichen Kennwerten in bezug auf die Festigkeit und Porosität ist es zweckmässig, ein exothermes Gemisch zu verwenden, das zusätzlich mindestens ein aus der I-III. Gruppe des Periodensystems gewähltes Metall oder einzeln oder im Gemisch genommen das Karbid, Borid, Silizid zumindest eines aus der IV-VI., VIII. Gruppe des Periodensystems gewählten Metalls oder einzeln oder im Gemisch genommen das Oxid, Nitrid, wenigstens eines aus der III-V. Gruppe des Periodensystems gewählten Elementes zu verwenden.

Es war unmöglich anzunehmen, dass das exotherme Gemisch, das mindestens ein aus der IV-VI., VIII Gruppe des Periodensystems gewähltes Metall und zumindest ein aus der Reihe Bor, Kohlenstoff, Silizium gewähltes Nichtmetall enthält, unter den Verbennungsbedingungen die Herstellung eines porösen Materials von hoher Qualität gewährleisten wird. Es war notwendig, zahlreiche Experimente für die Auswahl von technologischen Parametern und Bedingungen der Durchführung des Verfahrens anzustellen.

Dadurch, dass man in das exotherme Gemisch Metalle der I-VI. Gruppe des Periodensystems und hochschmelzende Verbindungen vom Typ der Boride, Silizide und Karbide von Metallen der IV-VI., VIII. Gruppe des Periodensystems, die Nitride und Oxide von Elementen der III-V. Gruppe des Periodensystems einführt, wird es möglich, hochschmelzende poröse Materialien unterschiedlicher Zusammensetzung mit verschiedenartigen physikalisch-mechanischen Eigenschaften herzustellen. Die Durchführung des Prozesses im Verbrennungsverfahren gewährleistet seine Effektivität, hohe Leistung und geringe Energieintensität.

Die Verdichtung des exothermen Gemisches einer vorgegebenen Zusammensetzung ist zur Regelung der Porosität und Gewährleistung der geforderten mechanischen Festigkeit des herzustellenden Materials notwendig. Die Verdichtung des genannten Gemisches bis zu einer Dichte, die der Dichte des Endmaterials im wesentlichen gleich ist, führt zur maximalen Festigkeit des letzteren.

Die Teilchengrösse von Komponenten, die für die Zubereitung des exothermen Ausgangsgemisches verwendet werden, beträgt in der Regel 0,005 - 0,1 mm, obwohl andere Varianten der Dispersität der Komponenten im Gemisch möglich sind. Zur Herstellung von qualitätsgerechten Materialien und Erzeugnissen werden die Komponenten des Gemisches sorgfältig durchgemischt. Im Falle der Herstellung eines Erzeugnisses aus einem exothermen Gemisch der geforderten Zusammensetzung formiert man einen Rohling mit einer bestimmten Form mit bestimmten Abmessungen und Dichte, welche den ähnlichen Parametern des Fertigerzeugnissen entsprechen.

Die Formung von Rohligen nimmt man nach einem beliebigen bekannten Verfahren vor, beispielsweise durch Pressen in einem Presswerkzeug, in einer Druckkammer mit Gas als Druckmedium oder in einer hydraulischen Druckkammer, durch Strangpressen. In Abhängigkeit von der Zusammensetzung des Gemisches und den Charakteristiken des Materials oder des Erzeugnisses beträgt die Formungskraft 10 bis 400 MPa. Die Möglichkeit der Herstellung von Erzeugnissen mit einer vorgegebenen Form, mit vorgegebenen Abmessungen und einem vorgegebenen Porositätsgrad wird dabei durch Führung des Prozesses unter solchen Bedingungen (Ausgangsparameter des gepressten Rohlings, Verlauf der thermischen Vakuumbehandlung, Verbrennungsbedingungen) erreicht, wenn das Erzeugnis nach der Verbrennung die Ausgangsmasse beibehält, oder der Prozess wird so geführt, dass die Änderung der Abmessungen gering und stabil reproduzierbar ist. Dies erlaubt es, im weiteren die mechanische Bearbeitung von sich nach der Verbrennung ergebenden porösen Erzeugnissen auf ein Minimum zu reduzieren. Die Durchführung einer vorläufigen thermischen Vakuumbehandlung des verdichteten exothermen Gemisches ist zur Regelung des Niveaus der Fremdgasentwicklung während des Verbrennungsvorgangs erforderlich. Da die Pulver von Ausgangskomponenten stets eine erhebliche Menge von adsorbierten und aufgelösten Gasen (Wasser, Wasserstoff, Stickstoff, Sauerstoff u.a.) enthalten, so beginnen infolge einer hohen Temperatur (1500 bis 3500°C), die während des Verbrennungsvorgangs entsteht, diese Gase sich durch Desorption und Verdampfung in das Volumen des genannten Gemisches oder Rohlings zu entwickeln und sich in den Poren anzusammeln. Mit dem Temperaturanstieg wächst schnell der Druck in den Poren (bis zu mehreren hundert Atmosphären), und bei Erreichen der Druckfestigkeitsgrenze wird das verbrennende exotherme Gemisch oder der Rohling zerstört.

Um unter diesen Bedingungen ein qualitätsgerechtes hochschmelzendes poröses Material oder ein Erzeugnis aus ihm herzustellen, ist die Durchführung einer vorläufigen thermischen Vakuumbehandlung derselben zwecks teilweiser Entfernung von Fremdgasen erforderlich. Die Regelung der Menge von sich während des Verbrennungsvorgangs entwickelnden Gasen ist zur Herstellung eines Materials mit einem bestimmten Porositätsgrad, einer bestimmten Form und bestimmten Abmessungen notwendig, weil gerade die Fremdgasentwicklung durch Auflockerung des Materials beim Ausströmen der Gase über die Poren zur Erzeugung eines porösen Gefüges während des Verbrennungsvorgangs des Materials führt, und die Menge dieser Gase bestimmt den Porositätsgrad und die Qualität des herzustellenden hochschmelzenden porösen Materials oder des Erzeugnisses aus ihm. Den optimalen Verlauf der thermischen Vakuumbehandlung wählt man experimentell in Abhängigkeit von der Zusammensetzung des Ausgangsgemisches, den Charakteristiken des herzustellenden Materials oder Erzeugnisses. Für verschiedene Arten der genannten Materialen und Erzeugnisse liegt dieser optimale Verlauf in folgenden Grenzen: die Temperatur 300 bis 700°C bei einem bevorzugten Druck von $13,3-1,3 \cdot 10^{-3}$ Pa und einer Dauer 5 - 30 Minuten. Eine Abweichung der Parameter der thermischen Vakuumbehandlung von den für des betreffende Material oder Erzeugnis aus ihm optimalen Parametern führt im Ergebnis des Prozesses zur Verschlechterung ihrer Qualität, zur ungleichmässigen Porosität, zur Bildung von Lunkern und Rissen, zur Verzerrung der Form und Abmessungen und im Falle einer erheblichen Abweichung - zur Zerstörung des Materials oder des Erzeugnisses. So findet bei einer Temperatur unterhalb von 300°C eine schwache Entfernung von Fremdgasen statt, im Material und im Rohling entstehen nach der Verbrennung Risse und es kommt sogar zur Zerstörung desrelben. Bei einer Temperatur oberhalb von 700°C agglomeriert das herzustellende Material oder das Erzeugnis stark, der Prozess der Initiierung und der Steuerung der Parameter des porösen Gefüges geht schwerer vonstatten.

Nach der thermischen Vakuumbehandlung bringt man die Temperatur des verdichteten Gemisches oder des Rohlings auf 200 bis 1050°C zur Regelung des Porositätsgrades, der Porengrösse und der mechanischen Festigkeit durch Kühlen oder Erwärmen. Die Initiierung der Verbrennung des verdichteten Gemisches oder des Rohlings kann an jeder beliebigen Stelle ihrer Oberfläche mit Hilfe einer beliebigen Wärmequelle (Laserstrahl, elektrischer Lichtboden), vorzugsweise mittels einer elektrischen Wendel, zustandegebracht werden. Die Durchführung des Verbrennungsvorgangs unter den Bedingungen des Vakuums oder einer Inertatmosphäre bei einem Druck von nicht über 1,5 MPa begünstigt die Vergasung verschiedenartiger Beimengungen und gewährleistet dadurch die Herstellung von porösen hochschmelzenden Materialien oder Erzeugnissen mit der im Grunde vollständig offenen Art der Poren durch Auflockerung des exothermen Gemisches beim Ausströmen von Fremdgasen. Zweckmässig ist die Kühlung im Vakuum oder in einer Inertgasatmosphäre des Materials oder des Erzeugnisses, die auf hohe Temperaturen (1500 bis 3500°C) erwärmt sind, da eine Oxidation derselben durch Luftsauerstoff ausgeschlossen wird. Bei der Realisierung des erfindungsgemässen Verfahrens wird das herzustellende Material oder das Erzeugnis nicht nur durch Beimengungen verunreinigt, wie dies bei der Synthese in einem Ofen der Fall ist, sondern es geht ihre Reinigung von einer ganzen Reihe Beimengungen durch Verdampfung dieser Beimengungen in der Verbrennungswelle vonstatten.

Die Durchführung des Prozesses der Verbrennung und Kühlung unter einem Inertgasdruck von nicht mehr als 1,5 MPa gewährleistet die Herstellung von qualitätsgerechten hochschmelzenden Materialien oder Erzeugnissen (ohne Risse und Lunker), falls pulverförmige Ausgangskomponenten verwendet werden, die als Beimengungen eine grosse Menge des chemisch gebundenen Sauerstoffs, nämlich über 1,5 Masse%, enthalten.

Zur Herstellung eines hochschmelzenden porösen Materials oder Erzeugnisses aus ihm mit einer Gesamtporosität von 25 bis 45 Vol.% wirkt man während des Verbrennungsvorgangs auf das verdichtete exotherme Gemisch oder den Rohling mit einem Druck von vorzugsweise 0,2 bis 3,5 Mpa in der Bewegungsrichtung der Verbrennungsfront ein. Ein solches Gefüge wird durch Verformung einer Schicht der flüssigen Phase gewährleistet, welche während des Verbrennungsvorgangs entsteht und aus den geschmolzenen Ausgangskomponenten und flüssigen Zwischenprodukten der Reaktion besteht.

Bei der Herstellung von Erzeugnissen komplizierten Profils aus den Rohlingen veränderlichen Querschnitts ist eine Änderung der Verbrennungstemperatur über den Rohling wegen Änderung der Menge der aus den verbrannten Schichten zu den unverbrannten übertragenden Wärme zu verzeichnen. Diese Änderung der Verbrennungstemperatur führt zu Veränderungen des Gefüges des Materials und der Festigkeit desselben. Bei der Herstellung von Erzeugnissen in Form eines Kegels verbrennt z.B. die Grundfläche des Kegels bei einer wesentlich niedrigeren Temperatur als seine Spitze, was die Nichtisotrope der Eigenschaften bedingt. Um eine gleichmässige Bewegung der Verbrennungsfront bei konstanter Vebrennungstemperatur und folglich die Isotropie der Eigenschaften des herzustellenden Erzeugnisses sicherzustellen, ist es eine unerlässliche Bedingung, bei dem Rohling ein im wesentlichen konstantes und in der Bewegungsrichtung der Verbennungsfront grössenmässig gleiches Querschnittsprofil zu gewährleisten. Dies lässt sich erstens zustandebringen, wenn man einen Rohling mit konstantem Querschnittsprofil verwendet, aus welchem nach der Verbrennung ein Erzeugnis gebildet wird, das eine mechanische Bearbeitung zwecks Herstellung eines Erzeugnisses mit kompliziertem Profil erfordert. Bei dieser Bearbeitung werden in das Material des Erzeugnisses zahlreiche Keime von Rissen hineingebracht, was das Niveau seiner Betriebs- und Festigkeitseigenschaften wesentlich herabsetzt. Zweitens wird dies durch Verwendung von Auflagen erreicht, die eine verschiedene Form haben können, bei der Vereinigung mit dem Rohling veränderlichen Profils aber einen zusammengesetzten Rohling bilden sollen, der den vorgenannten Bedingungen entspricht. Es wurde festgestellt, dass zwischen der Auflage und dem Rohling eine Grenzfläche vor und nach der Synthese beibehalten wird, und die Auflage wird leicht von dem Fertigerzeugnis getrennt. Die Grenzfläche bringen keine vesentlichen Verzerrungen in die Struktur der Verbrennungsfront und folglich auch in die Eigenschaften des hochschmelzenden porösen Materials hinein. Die Auflage soll aus einem exothermen Gemisch ausgeführt werden, in dem die Bewegungsgeschwindigkeit der Verbrennungsfront im wesentlichen gleich oder höher ist als die Bewegungsgeschwindigkeit der Verbrennungsfront im exothermen Gemisch des zu bearbeitenden Rohlings. In diesem Falle werden Verzerrungen in der Struktur der Verbrennungsfront an der Grenze zwischen dem Rohling und der Auflage und letzten Endes im Gefüge des herzustellenden Materials fehlen.

Bei der Herstellung eines Erzeugnisses in Form eines Ringes teilt sich die lokal initiierte Verbrennungsfront bei ihrer Bewegung zuerst unvermeidlich in zwei Fronten und danach stossen diese Fronten zusammen. Wie Experimente zeigen, ist in der Zone des Zusammenstosses der Fronten eine wesentliche Vergrösserung des Gefüges des Materials - eine Vergrösserung der mittleren Porengrösse - zu verzeichnen, wobei eine Schichtung des Materials und ein Verzug der Erzeugnisse möglich sind, was einen nicht ausbesserungsfähigen Ausschuss bedeutet. Dazu wird in der Öffnung des Rohlings eine zylindrische Auflage untergebracht, und von der Seite dieser Auflage her initiiert man mit Hilfe einer Wendel die Verbrennung, was einen Zusammenstoss der Fronten zu vermeiden erlaubt.

Kurzbeschreibung der Erfindung

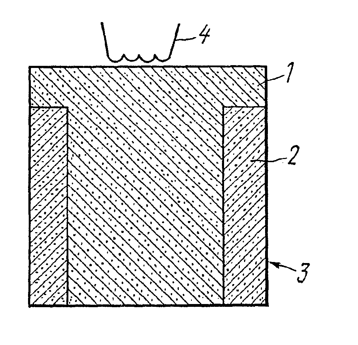

In der Zeichnung ist ein gemäss dem beanspruchten Verfahren hergestellter zusammengesetzter Rohling schematisch dargestellt.

Beste Ausführungsvariante der Erfindung

Man bereitet ein exothermes Gemisch der Pulver von Titan und Kohlenstoff, die eine Dispersität der Teilchen unter 0,1 mm vorzugsweise 0,02 mm, haben, bei dem folgenden Verhältnis der Komponenten zu: 79,6 Masse% Ti und 20,4 Masse% C. Das zubereitete Gemisch verdichtet man durch Pressen bis zur Dichte $2,8 \cdot 10^{-3}$ kg/m$^3$ und bringt es in eine Vakuumkammer ein, die mit einem Erhitzer und einem System zur Initiierung der Verbrennung versehen ist. Die Kammer evakuiert man bis zum Restdruck 0,133 Pa, erwärmt das verdichtete exotherme Gemisch bis 700°C und führt dessen thermische Vakuumbehandlung während 20 Minuten, indem man durch Evakuieren den Druck 0,133 Pa aufrechterhält. Hiernach kühlt man das Gemisch bis auf die Temperatur von 400°C ab und initiiert im Gemisch lokal bei dem Druck 0,133 Pa mittels einer elektrischen Wendel an einer beliebigen Stelle die Verbrennung. Die lineare Ausbreitungsgeschwindigkeit der Verbrennungsfront beträgt dabei $2,8 \cdot 10^{-3}$ m/s. Nach der Abkühlung im Vakuum auf 200°C nimmt man das fertige hochschmelzende poröse Material aus der Kammer heraus. Das hergestellte Material besteht aus Titankarbid. Die Dichte des Materials $2,5 \cdot 10^{-3}$ kg/m$^3$, die Gesamtporosität beträgt 49 Vol.%, der Anteil von offenen Poren macht 99,7% von der Gesamtporosität aus. Die Poren haben eine gedehnte Form mit Quermassen 0,02 - 0,08 mm. Das Material besteht aus dicht aneinander anliegenden rundlichen Körnern des Titankarbids mit 0,005 bis 0,02 mm Grösse, welche eine zusammenhängende Masse von 0,02 bis 0,08 mm Dicke bilden. Die Druckfestigkeit des hergestellten hochschmelzenden porösen Materials beträgt 35 MPa.

Zur Herstellung eines Erzeugnisses aus dem erfindungsgemässen hochschmelzenden porösen Materials in Form eines Zylinders mit ringförmigem Vorsprung bereitet man ein Gemisch der Pulver von Kobalt, Molybdän und Bor, die eine Dispersität der Teilchen unter 0,01 mm haben, bei dem folgenden Verhältnis der Komponenten (Masse%) zu: Co : Mo : B = 67,5:18:14,5. Aus dem Gemisch presst man einen Rohling 1 (s. Zeichnung) in Form eines Zylinders mit ringförmigem Vorsprung mit dem Durchmesser 20 mm, der Höhe 30 mm, dem Durchmesser des ringförmigen Vorpsrungs 30 mm und der Dichte $3,3 \cdot 10^{-3}$ kg/m$^3$. Aus demselben Gemisch presst man eine Auflage in Form eines Hohlzylinders 2 mit dem Aussendurchmesser 30 mm und dem Innendurchmesser 20 mm, mit der Höhe 25 mm und der Dichte $3,3 \cdot 10^{-3}$ kg/m$^3$. Die Auflage 2 setzt man auf den Rohling 1 auf und bildet einen zusammengesetzten Rohling 3 zylindrischer Form mit 30 mm Durchmesser und 30 mm Höhe, wie das in der Zeichnung gezeigt ist. Den Rohling 3 bringt man in eine (in der Zeichnung nicht gezeigte) Vakuumkammer ein und führt an ihre Stirnfläche auf der Seite des Rohlings 1 eine elektrische Wendel 4 des Systems zur Initiierung der Verbrennung wie in der Zeichnung gezeigt heran. Die Kammer evakuiert man bis zum Restdruck $1,3 \cdot 10^{-3}$ Pa, erwärmt den zusammengesetzten Rohling bis 300°C und führt dessen thermische Vakuumbehandlung während 25 Minuten, indem man durch Evakuieren den Druck $1,3 \cdot 10^{-3}$ Pa aufrechterhält. Hiernach kühlt man den zusammengesetzten Rohling 3 auf 200°C ab, erzeugt in der Kammer einen Druck von 13,3 Pa durch Helium und initiiert im Rohling die Verbrennung mittels der elektrischen Wendel. Der Prozess der Zusammenwirkung der Gemischkomponenten kommt durch die Wärme zustande, die sich im Ergebnis der Verbrennungsreaktion entwickelt, und breitet sich über den Rohling 1 und die Auflage 2 mit der Geschwindigkeit $11 \cdot 10^{-3}$ m/s aus. Nach der Abkühlung nimmt man den zusammengesetzten Rohling 3 heraus und trennt das Erzeugnis von der Auflage 2. Als Ergebnis erhält man ein Erzeugnis in Form eines Zylinders mit ringförmigem Vorsprung mit den Abmessungen, die im wesentlichen den Abmessungen des gepressten Rohlings 1 gleich sind, und mit der Dichte des Materials $3,3 \cdot 10^{-3}$ kg/cm$^3$. Das hochschmelzende poröse Material des Erzeugnisse hat die Zusammensetzung: 80 Masse% CoB und 20 Masse% MoB. Die Porosität des Materials 57 Vol.%, der Anteil von offenen Poren 99,7% von der Gesamtporosität, die Porengrösse 0,02 - 0,08 mm, die Druckfestigkeit 16,0 MPa. Die verbrannte Auflage 2 besitzt Abmessungen, die den Abmessungen der gepressten Auflage 2 im wesentlichen gleich sind, und besteht aus einem Material, welches nach der Zusammensetzung und den Eigenschaften dem Material, des Erzeugnisses ähnlich ist. Die Auflage kann unmittelbar in Form eines Zylinders verwendet oder zu Pulver zum Einsatz in der Pulvermetallurgie zermahlen werden.

Nachstehend werden konkrete Ausführungsbeispiele der vorliegenden Erfindung angeführt.

Beispiel 1

Man bereitet ein exothermes Gemisch der Pulver von Titan, Kohlenstoff und Chromkarbid, die eine Dispersität der Teilchen unter 0,1 mm, vorzugsweise 0,015 mm, haben, bei dem folgenden Verhältnis der Komponenten in Masse% zu: Ti : C : Cr : $Cr_3O_2$ = 63,7:17,6:8,7:10.

Das zubereitete Gemisch verdichtet man bis zur Dichte $2,6 \cdot 10^{-3}$ kg/m$^3$ und bringt in eine Vakuumkammer ein. Die Kammer evakuiert man bis zum Restdruck $1,3 \cdot 10^{-3}$ Pa, erwärmt das Gemisch bis zur Temperatur 650°C und führt dessen thermische Vakuumbehandlung während 15 Minuten durch, indem man durch Evakuieren den Druck $1,3 \cdot 10^{-3}$ Pa aufrechterhält. Nach Beendigung der thermischen Vakuumbehandlung erwärmt man das verdichtete Gemisch während 2 min bis zur Temperatur 1050°C und erzeugt gleichzeitig in der Kammer einen Druck eines Inertgas (vorzugsweise des Argons) von 1,5 MPa, worauf man im verdichteten exothermen Gemisch mittels einer elektrischen Wendel lokal die Verbrennung initiiert. Die Ausbreitungsgeschwindigkeit der Verbrennungsfront beträgt 10,5 mm/s. Danach kühlt man das hergestellte hochschmelzende Material in einer Inertatmosphäre ab.

Zusammensetzung des Materials: 80 Masse% TiC und 20 Masse% $Cr_3C_2$ in Form einer festen Lösung derselben ineinander. Die Dichte dieses Materials $1,65 \cdot 10^{-3}$ kg/m$^3$, die Gesamtporosität 70 Vol.%, der Anteil von offenen Poren 99,6% von der Gesamtporosität. Die Porengrösse 0,07 bis 0,2 mm. Die Druckfestigkeit beträgt 5,5 MPa.

Beispiel 2

Man bereitet ein exothermes Gemisch der Pulver von Molybdän, Silizium, Aluminium und Aluminiumoxid, die eine Dispersität unter 0,02 mm haben, bei dem folgenden Verhältnis der Komponenten (Masse%) zu:

Mo : Si : Al : $Al_2O_3$ = 53,5 : 31,5 : 10,5.

Das zubereitete Gemisch verdichtet man bis zur Dichte $3 \cdot 10^{-3}$ kg/m$^3$ und bringt in eine Vakuumkammer ein, die mit einem Erhitzer, einem System zur Initiierung der Verbrennung und einem System zur Nachpressung des Materials versehen ist. Die Kammer evakuiert man bis zum Restdruck 1,33 Pa, erwärmt dieses Gemisch bis zur Temperatur von 700°C und führt dessen thermische Vakuumbehandlung während 5 Minuten durch, indem man durch Evakuieren den Druck 1,33 Pa aufrechterhält. Danach legt man an das verdichtete Gemisch durch Pressen einen Druck von 3,5 MPa an und initiiert gleichzeitig im Gemisch lokal mittels einer elektrischen Wendel die Verbrennung so, dass die Bewegungsrichtung der Verbrennungsfront mit der Druckrichtung zusammenfällt. Mit der gleichen Kraft von 3,5 MPa wirkt man auf das verbrennende Gemisch während des ganzen Verbennungsvorgangs ein, und nach Beendigung des Verbrennungsvorgangs hebt man den Druck auf. Die Ausbreitungsgeschwindigkeit der Verbrennungsfront beträgt 15 mm/s. Die Zusammensetzung des hergestellten hochschmelzenden porösen Materials: 85 Masse% Mo und 10 Masse% Al und 5 Masse% $Al_2O_3$. Die Dichte des Materials $3,8 \cdot 10^{-3}$ kg/m$^3$, die Gesamtporosität. Die Porengrösse 0,01 bis 0,05 mm. Die Druckfestigkeit 45 MPa.

Nachstehend sind in der Tabelle 1 andere Ausführungsbeispiele des Verfahrens unter Angabe der Ausgangszusammensetzung des exothermen Gemisches und der Bedingungen des Prozesses dargestellt. In der Tabelle II sind die Eigenschaften des hergestellten hochschmelzenden porösen Materials und die Charakteristiken derselben dargestellt.

Tabelle I

| Lfd. Nr. | Ausgangskomponenten und deren Gehalt im exothermen Gemisch (Masse%) | | | | | | |
|---|---|---|---|---|---|---|---|
| | Metall der IV. Gruppe | Metall der V. Gruppe | Metall der VI. Gruppe | Metall der VIII. Gruppe | B | C | Si |
| I | 2 | 3 | 4 | 5 | 6 | 7 | 8 |
| 3 | Hf 93,7 | | | | | 6,3 | |
| 4 | | | Cr 86,7 | | | I3,3 | |
| 5 | Zr 80,8 | | | | I9,2 | | |
| 6 | | Nb 89,5 | | | I0,5 | | |
| 7 | | | Mo 90,0 | | I0,0 | | |
| 8 | | | | Co 84,4 | I5,6 | | |
| 9 | Ti 46,2 | | | | | | 53,8 |
| 10 | | Y 47,6 | | | | | 52,4 |
| 11 | | | Mo 63,0 | | | | 37,0 |
| 12 | Ti 7I,7 | | Cr 8,7 | | | I9,6 | |
| I3 | | Nb 45,0 | Mo 45,0 | | | I0,0 | |
| I4 | Ti 75,2 | | | | 3,I | I6,3 | 5,4 |
| I5 | | Ta 84,4 | | | | 5,6 | |

Fortsetzung der Tabelle 1

| I | 2 | 3 | 4 | 5 | 6 | 7 | 8 |
|---|---|---|---|---|---|---|---|
| I6 | | Y 38,I | | | | | 4I,9 |
| I7 | Zr 6I,7 | | | | | 8,3 | |
| I8 | Ti 39,8 | Ta IO,0 | Mo IO,0 | Co IO,0<br>Ni 20,0 | | IO,2 | |
| I9 | Zr I2,4 | Y 5,0 | Mo 3I,5 | Ni IO,0 | | | 26,I |
| 20 | Ti 39,8 | | | Fe IO,0 | | IO,2 | |
| 2I | Ti 4I,3 | | | | I8,7 | | |
| 22 | | | Mo 37,8 | | | | 22,2 |
| 23 | Ti 47,8 | | | | | I2,2 | |
| 24 | | | Cr 60,7 | | | 9,3 | |
| 25 | Ti 33,3 | Ta 4,7 | Cr 4,3 | Co 5,0<br>Ni 5,0 | I4,0 | I,0 | 2,7 |

Fortsetzung der Tabelle 1

| Lfd. Nr. | Metall der I. Gruppe | Metall der II. Gruppe | Metall der III. Gruppe | Karbid von Metallen der IV-VI. VIII. Gruppe | Borid von Metallen der IV-VI. Gruppe | Silizid von Metallen der IV-VI. Gruppe | Nitrid eines Elementes der III-V. Gruppe |
|---|---|---|---|---|---|---|---|
| 1 | 9 | 10 | 11 | 12 | 13 | 14 | 15 |
| 15 | Cu 10,0 | | | | | | |
| 16 | | Mg 20,0 | | | | | |
| 17 | Cu 15,0 | | Y 15,0 | | | | |
| 18 | Cu 5,0 | Mg 5,0 | Al 5,0 | | | | |
| 20 | | | | NbC 10,0 TiC 20,0 $Cr_2C_2$ 10,0 | | | |
| 21 | | | | | $TiB_2$ 20,0 MoB 10,0 TaB 10,0 | | |
| 22 | | | | | | $TiSi_2$ 10,0 $MoSi_2$ 20,0 VSi 10,0 | |
| 23 | | | | | | | TiN 20,0 NbN 10,0 AlN 10,0 |
| 25 | Ag 2,5 | Mg 2,5 | La 5,0 | NbC 5,0 | MoB 2,5 | $Ti_5Si_3$ 5,0 | AlN 2,5 |

| Lfd. Nr. | Oxyd eines Elementes der III-IV. Gruppe | Dichte des ver-dichteten Ge-misches, kg/m$^3$.I0$^3$ | Bedingungen der thermischen Va-kuumbehandlung | | | Bedingungen der Initiie-rung der Verbrennung | | Bewegungsge-schwindigk-keit der Verbrennungs-front |
|---|---|---|---|---|---|---|---|---|
| | | | T °C | P Pa | $\bar{\tau}$ min | T 0 | P Pa | front mm/s |
| I | I6 | I7 | I8 | I9 | 20 | 2I | 22 | 23 |
| 3 | | 6,8 | 700 | I3,3 | I0 | 700 | 5 I0$^5$ | 3 |
| 4 | | 2,9 | 600 | I3,3 | I0 | 900 | Argon I3,3 | 35 |
| 5 | | 3,0 | 700 | I,33 | I5 | 300 | 15 10$^5$ Helium | II |
| 6 | | 3,2 | 700 | I,33 | 20 | 600 | I,33 | 3,5 |
| 7 | | 4,3 | 600 | 0,0I3 | I5 | 700 | 0,0I3 | 4 |
| 8 | | 4,0 | 300 | 0,00I3 | I5 | 300 | 0,00I3 | I0 |
| 9 | | I,8 | 600 | 0,0I3 | 5 | 200 | 0,0I3 | 2 |
| I0 | | 2,0 | 700 | 0,I3 | I0 | 500 | 0,I3 | 9 |
| II | | 2,9 | 600 | 0,0I3 | I0 | 600 | 0,0I3 | I0 |
| I2 | | 2,4 | 700 | 0,I3 | I5 | 700 | 0,I3 | 5,2 |
| I3 | | 4,5 | 600 | 0,0I3 | 20 | 700 | 0,0I3 | 4,5 |
| I4 | | 2,5 | 700 | I,33 | I5 | 700 | 1·10$^5$ Argon | I2 |
| I5 | | 7,2 | 700 | I,33 | 20 | 900 | I,33 | 2,5 |
| I6 | | 2,3 | 700 | 0,I3 | I0 | 700 | 0,I3 | II |
| I7 | | 4,6 | 700 | 0,0I3 | I5 | 900 | 0,0I3 | I,5 |
| I8 | | 3,0 | 650 | 0,I3 | I0 | 400 | 0,I3 | 0,9 |
| I9 | | 3,4 | 700 | 0,I3 | I5 | 700 | I,33 | I3 |
| 20 | | 3,I | 700 | 0,0I3 | I0 | 800 | 0,0I3 | 0,8 |
| 2I | | 2,6 | 700 | 0,0I3 | I5 | 600 | 0,0I3 | I8 |
| 22 | | 3,9 | 700 | 0,I3 | I5 | 900 | 0,I3 | I,2 |
| 23 | | 2,8 | 700 | I,33 | I0 | 700 | I,33 | 0,9 |

| 1 | 16 | 17 | 18 | 19 | 20 | 21 | 22 | 23 |
|---|----|----|----|----|----|----|----|----|
| 24 | $Al_2O_3$ + $ZrO_2$ 15      15 | 3,3 | 700 | 13,3 | 15 | 800 | $3 \cdot 10^5$ Argon | 4,3 |
| 25 | $ZrO_2$ 5,0 | 2,7 | 600 | 1,33 | 20 | 700 | 1,33 | 0,7 |

Tabelle II

| Lfd. Nr. | Phase Masse% | Charakteristik des hochschmelzenden porösen Materials | | | | |
|---|---|---|---|---|---|---|
| | | Dichte, $kg/m^3 \cdot 10^{-3}$ | Gesamt-porosität, Vol.% | Anteil von offenen Poren % | Porengröße, $mm \cdot 10^{-2}$ | Druckfestigkeit, MPa |
| 1 | 2 | 3 | 4 | 5 | 6 | 7 |
| 3 | $HfC$ | 6,3 | 50 | 99,5 | 1-4 | 45,0 |
| 4 | $Cr_3C_2$ | 2,0 | 70 | 99,7 | 10-20 | 14,0 |
| 5 | $ZrB_2$ | 3,4 | 45 | 99,3 | 2-6 | 41,0 |
| 6 | $NbB$ | 3,2 | 58 | 99,7 | 1-4 | 8,0 |
| 7 | $MoB$ | 3,9 | 53 | 99,5 | 1-4 | 1,5 |
| 8 | $CoB$ | 3,6 | 50 | 99,7 | 3-9 | 25 |
| 9 | $TiSi_2$ | 2,2 | 45 | 99,6 | 2-6 | 33 |
| 10 | $VSi_2$ | 2,0 | 55 | 99,7 | 2-6 | 17,0 |
| 11 | $MoSi_2$ | 2,6 | 52 | 99,7 | 0,5-3 | 23 |
| 12 | $90TiC+10Cr_3C_2$ | 2,25 | 55 | 99,7 | 3-10 | 32 |
| 13 | $MoB+NbB$ | 3,9 | 50 | 99,6 | 1-4 | 6 |
| 14 | $80TiC+10TiSi_2+10TiB_2$ | 3,0 | 40 | 98,0 | 3-9 | 88 |
| 15 | $90TaC+10Cu$ | 6,7 | 55 | 99,0 | 2-4 | 14 |
| 16 | $80VSi_2+20Mg$ | 1,8 | 58 | 99,2 | 4-8 | 12 |
| 17 | $90ZrC+5Cu+5Y$ | 3,9 | 50 | 99,5 | 3-8 | 35 |
| 18 | $50TiC+10Ta+10Mo+10Co+20Ni$ | 5,9 | 25 | 72 | 2-6 | 200 |
| 19 | $50MoSi_2+20ZrSi_2+5V,Cu,Mg;Al+10Ni$ | 3,1 | 45 | 93 | 3-9 | 32 |
| 20 | $80TiC+10NbC+10Cr_3C_2$ | 2,7 | 50 | 99,6 | 2-9 | 41 |
| 21 | $80TiB_2+10MoB+10TaB$ | 2,6 | 57 | 99,7 | 0,5-4 | 40 |
| 22 | $80MoSi_2+10TiS_2+10VSi$ | 3,5 | 63 | 99,5 | 2-6 | 85 |
| 23 | $60TiC+20TiN+10NbN,AlN$ | 2,6 | 54 | 99,5 | 2-10 | 35 |
| 24 | $70Cr_3C_2+15Al_2O_3+15ZrO_2$ | 3,0 | 50 | 99,1 | | 20 |
| 25 | $45TiB_2+5TaC+5Cr_2C_2+5TiSi_2+5Co+5Ni+2,5Ag+2,5Mg+5ha+5NbC+2,5MoB+5Ti_5Si_3+2,5AlN+5ZrO_2$ | 2,5 | 50 | 99,6 | 2-6 | 14 |

Beispiel 26

Man bereitet ein exothermen Gemisch der Pulver von Tantal und Kohlenstoff mit einer Dispersität der Teilchen unter 0,01 mm bei dem folgenden Verhältnis der Komponenten (Masse%) zu: Ta : C = 93,8 : 6,2. Aus dem hergestellten Gemisch presst man einen Rohling in Form eines Ringes mit dem Aussendurchmesser 20 mm, dem Innendurchmesser 15 mm, der Höhe 30 mm und der Dichte $6,5 \cdot 10^{-3}$ kg/m$^3$. Man bereitet ein exothermes Gemisch der Pulver von Titan, Kohlenstoff und Titankarbid mit einer Dispersität der Komponenten unter 0,04 mm bei dem folgenden Verhältnis der Komponenten in Masse% zu: Ti : C : TiC = 63,7 : 16,3 : 20. Aus dem zweiten Gemisch presst man eine Auflage in Form eines Zylinders mit dem Durchmesser 15 mm, der Höhe 30 mm, der Dichte $2 \cdot 10^{-3}$ kg/m$^3$. Dann bringt man die Auflage in der Öffnung des ringförmigen Rohlings unter Bildung eines zusammengesetzten Rohlings in Form eines Zylinders mit 20 mm Durchmesser und 30 mm Höhe unter. Diesen Rohling bringt man in eine Vakuumkammer ein und schliesst an die Stirnfläche der Auflage eine elektrische Wendel an. Die Kammer evakuiert man bis zum Restdruck 0,013 Pa, erwärmt den zusammengesetzten Rohling bis zur Temperatur 700°C und führt dessen thermische Vakuumbehandlung während 20 Minuten durch, indem man durch Evakuieren den Druck 0,013 Pa aufrechterhält. Danach erwärmt man den Rohling bis 1050°C, erzeugt in der Kammer den Druck 1,5 MPa mit Argon und initiiert in ihr mit Hilfe der elektrischen Wendel die Verbrennung. Zuerst bewegt sich die Bewegungsfront mit der Geschwindigkeit 12 mm/s in der Auflage und initiiert dann, nachdem sie den ringförmigen Rohling erreicht hat, die Verbrennung in ihr an deren innerer Seitenfläche. Die Bewegungsgeschwindigkeit der Verbrennungsfront im ringförmigen Rohling beträgt 1,8 mm/s. Nach Beendigung des Verbrennungsvorgangs kühlt man das hergestellte Erzeugnis zusammen mit der Auflage in einer Inertgasatmosphäre auf die Temperatur von 200°C ab und trennt es von ihr ab. Man erhält ein Erzeugniss in Form eines Ringes, bei dem das Material Titankarbid ist, wobei das Erzeugnis den Innendurchmesser 15 mm, den Aussendurchmesser 20 mm und die Höhe 30,2 mm hat. Das Material kennzeichnet sich durch die Dichte $6,45 \cdot 10^{-3}$ kg/m$^3$, die Porosität 55 Vol.%, den Anteil von offenen Poren 99,7% von der Gesamtporosität, eine Porengrösse von 0,01 bis 0,025 mm, die Druckfestigkeit 17,0 MPa. Die Auflage hat die Form eines Zylinders und besteht aus Titankarbid, wobei der Durchmesser des Zylinders 14,7 mm und die Höhe 29,4 mm beträgt. Das Material der Auflage kennzeichnet sich durch die Dichte $2,2 \cdot 10^{-3}$ kg/m$^3$, die Porosität 55 Vol.%, den Anteil von offenen Poren 99,7% von der Gesamtporosität, durch eine Porengrösse 0,04 bis 0,14 mm und die Druckfestigkeit 20 MPa. Die Auflage kann auch in Form des Erzeugnisses verwendet werden.

Industrielle Verwertbarkeit

Das erfindungsgemässe hochschmelzende poröse Material und das Erzeugnis aus diesem finden ihre umfassende Anwendung im Maschinenbau, in der chemischen und metallurgischen Industrie.

PATENTANSPRÜCHE:

1. Hochschmelzendes poröses Material, dadurch g e k e n n z e i c h n e t, dass man ein exothermes Gemisch , das mindestens ein Metall der IV-VI., VIII. Gruppe des Periodensystems und zumindest ein aus der Reihe Bor, Kohlenstoff, Silizium gewähltes Nichtmetall enthält, wobei ihr Verhältnis die selbstständige Verbrennung des Gemisches gewährleistet, verdichtet und einer thermischen Vakuumbehandlung bei einer Temperatur von 300 bis 700°C unterwirft, worauf man die Temperatur des verdichteten exothermen Gemisches auf 200 bis 1050°C bringt und die lokale Initiierung der Verbrennung des genannten Gemisches im Vakuum oder in einer Inertgasatmosphäre bei einem Druck von nicht mehr als 1,5 MPa unter Bildung eines hochschmelzenden Materials mit einer Gesamtporosität von 25 bis 70 Vol.% vornimmt.

2. Material nach Anspruch 1, dadurch g e k e n n - z e i c h n e t, dass der Anteil von offenen Poren in ihm bis zu 99,7% von der Gesamtporosität beträgt.

3. Material nach Anspruch 1, dadurch g e k e n n -, z e i c h n e t, dass man die Verdichtung des exothermen Gemisches bis zu einer Dichte vornimmt, die der Dichte des Endmaterials im wesentlichen gleich ist.

4. Material nach Anspruch 3, dadurch g e k e n n - z e i c h n e t, dass man ein exothermes Gemisch verwendet, das zusätzlich mindestens ein aus der I-III. Gruppe des Periodensystems gewähltes Metall enthält.

5. Material nach Anspruch 4, dadurch g e k e n n - z e i c h n e t, dass man ein exothermes Gemisch verwendet, das zusätzlich einzeln oder im Gemisch genommen das Karbid, Borid, Silizid mindestens eines aus der IV-VI., VIII. Gruppe des Periodensystems gewählten Metalls enthält.

6. Material nach Anspruch 5, dadurch g e k e n n - z e i c h n e t, dass man ein exothermes Gemisch verwendet, das zusätzlich einzeln oder im Gemisch genommen das Oxid, Nitrid mindestens eines aus der III-V. Gruppe des Periodensystems gewählten Elementes enthält.

7. Material nach Anspruch 1, dadurch g e k e n n - z e i c h n e t, dass man während des Verbrennungsvorgangs auf das verdichtete exotherme Gemisch mit einem Druck in der Bewegungsrichtung der Verbrennungsfront einwirkt.

8. Erzeugnis, hergestellt aus dem hochschmelzenden porösen Material nach Anspruch 1.

9. Verfahren zur Herstellung des Erzeugnisses nach Anspruch 8, dadurch g e k e n n z e i c h n e t, dass man aus einem exothermen Gemisch, das mindestens ein Metall der IV-VI., VIII. Gruppe des Periodensystems und zumindest ein aus der Reihe Kohlenstoff, Bor, Silizium gewähltes Nichtmetall enthält, wobei ihr Verhätnis die selbständige Verbrennung des Gemisches gewährleistet, einen Rohling mit einer Dichte des exothermen Gemisches formiert, die der Dichte des Festigerzeugnisses im wesentlichen gleich ist, welchen Rohling man einer thermischen Vakuumbehandlung bei einer Temperatur von 300 bis 700°C unterwirft, worauf man die Temperatur des Rohlings auf 200 bis 1050°C bringt und die lokale Inittierung der Verbrennung dieses Rohlings im Vakuum oder in einer Inertgasatmosphäre bei einem Druck von nicht mehr als 1,5 MPa unter Bildung eines Fertigerzeugnisses durchführt.

10. Verfahren nach Anspruch 9, dadurch g e k e n n - z e i c h n e t, dass man vor der thermischen Vakuumbehandlung den Rohling (1) veränderlichen Querschnitts mit mindestens einer Auflage (2) bis zur Bildung eines zusammengesetzten Rohlings (3) vereinigt, dessen Querschnittsprofil im wesentlichen konstant und grössenmässig gleich in der Bewegungsrichtung der Verbrennungsfront ist, wobei die Auflage (2) aus einem exothermen Gemisch besteht, in welchem die Bewegungsgeschwindigkeit der Verbrennungsfront im wesentlichen gleich oder höher als die Bewegungsgeschwindigkeit der Verbrennungsfront im exothermen Gemisch des Rohlings (1) ist, worauf der zusammengesetzte Rohling (3) in der genannten Reihenfolge bearbeitet und von ihm die Auflage (2) getrennt wird.

11. Verfahren nach Anspruch 10, dadurch g e k e n n - z e i c h n e t, dass man die lokale Initiierung der Verbrennung des zusammengesetzten Rohlings in Form eines Ringes mit der in seiner Öffnung untergebrachten Auflage von der Seite dieser Auflage her zustandebringt.

12. Verfahren nach Anspruch 9, dadurch g e k e n n - z e i c h n e t, dass man während des Verbrennungsvorgangs auf den Rohling mit einem Druck in der Bewegungsrichtung der Verbrennungsfront einwirkt.

13. Verfahren nach Anspruch 9, dadurch g e k e n n - z e i c h n e t, dass man ein exothermes Gemisch verwendet, das zusätzlich mindestens ein aus der I-III. Gruppe des Periodensystems gewähltes Metall enthält.

14. Verfahren nach Anspruch 13, dadurch g e k e n n z e i c h n e t, dass man ein exothermes Gemisch verwendet, das zusätzlich einzeln oder im Gemisch genommen das Karbid, Borid, Silizid mindestens eines aus der IV-VI., VIII. Gruppe des Periodensystems gewählten Metalls enthält.

15. Verfahren nach Anspruch 14, dadurch g e k e n n z e i c h n e t, dass man ein exothermes Gemisch verwendet, das zusätzlich einzeln oder im Gemisch das Oxid, Nitrid mindestens eines aus der III-V. Gruppe des Periodensystems gewählten Elementes enthält.

# INTERNATIONAL SEARCH REPORT

International Application No PCT/SU 88/00267

## I. CLASSIFICATION OF SUBJECT MATTER (if several classification symbols apply, indicate all) ⁶

According to International Patent Classification (IPC) or to both National Classification and IPC

Int. Cl.⁵ C 22 C 1/05, C 22 C 1/08

## II. FIELDS SEARCHED

| Minimum Documentation Searched ⁷ | |
|---|---|
| Classification System | Classification Symbols |
| Int. Cl.⁴ | C 22 C 1/05, 1/08, 29/00, 29/127, 32/00<br>B 22 F 3/10; C 04 B 35/56, 35/58 |

Documentation Searched other than Minimum Documentation
to the Extent that such Documents are Included in the Fields Searched ⁸

## III. DOCUMENTS CONSIDERED TO BE RELEVANT⁹

| Category ° | Citation of Document, ¹¹ with indication, where appropriate, of the relevant passages ¹² | Relevant to Claim No. ¹³ |
|---|---|---|
| A | SU, A1, 460115 (Otdelenie instituta khimicheskoi fiziki AN SSSR), 3 September 1975 (03.09.75), the example, the claims | 1 |
| A | SU, A1, 617485 (Otdelenie instituta khimicheskoi fiziki AN SSSR), 19 July 1978 (19.07.78), example 7, the claims | 1,6 |
| A | US, A, 4717692 (Aluminum Company of America), 5 January 1988 (05.01.88), the claims | 1,6 |
| A | US, A, 4689077 (Eltech Systems Corporation), 25 August 1987 (25.08.87), the claims | 1,5 |
| A | WO, A1, 88/04649 (Kennametal Inc), 30 June 1988 (30.06.88), the claims | 1 |

./.

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 23 June 1989 (23.06.89) | 20 September 1989 (20.09.89) |

| International Searching Authority | Signature of Authorized Officer |
|---|---|
| ISA/SU | |

Form PCT/ISA/210 (second sheet) (January 1985)